(19)

Europäisches
Patentamt
European
Patent Office
Office européen
des brevets

(11) **EP 4 644 832 A1**

(12) **EUROPEAN PATENT APPLICATION**
published in accordance with Art. 153(4) EPC

(43) Date of publication:
05.11.2025 Bulletin 2025/45

(21) Application number: 23911355.8

(22) Date of filing: 26.10.2023

(51) International Patent Classification (IPC):
*G01C 3/06* (2006.01)     *G08G 1/16* (2006.01)
*G06T 7/593* (2017.01)

(52) Cooperative Patent Classification (CPC):
G01C 3/06; G06T 7/593; G08G 1/16

(86) International application number:
PCT/JP2023/038642

(87) International publication number:
WO 2024/142571 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.12.2022 JP 2022208354

(71) Applicant: **Astemo, Ltd.**
**Chiyoda-ku,**
**Tokyo 1000004 (JP)**

(72) Inventors:
• **KIDO Hideaki**
  **Tokyo 100-8280 (JP)**
• **IRIE Kota**
  **Hitachinaka-shi, Ibaraki 312-8503 (JP)**

(74) Representative: **Strehl & Partner mbB**
**Maximilianstrasse 54**
**80538 München (DE)**

(54) **IMAGE PROCESSING DEVICE**

(57)     An image processing device includes an arithmetic operation device. The arithmetic operation device detects an object for each of a plurality of images imaged by a plurality of cameras, estimates a distance to the object for each of the plurality of images, determines a feature point that can be acquired in any of the plurality of images among feature points of the object using the estimated distance to the object for each of the plurality of images and camera parameters of the plurality of cameras, obtains a feature amount around the determined feature point for each of the plurality of images, collates feature amounts of the plurality of images, and measures the distance to the object based on a result of collating the feature amounts.

[FIG. 8]

```
        START
          │
    PICK UP IMAGE          S100
          │
    DETECT OBJECT          S110
          │
  SPECIFY VISIBLE SURFACES S120
     OF BOTH CAMERAS
          │
  CUT OUT PARTIAL IMAGE    S130
          │
   SEARCH FEATURE POINT    S140
          │
  ACQUIRE FEATURE QUANTITY S150
          │
       COLLATE             S160
          │
   CALCULATE DISTANCE      S170
          │
         END
```

EP 4 644 832 A1

**Description**

Technical Field

The present invention relates to an image processing device.

Background Art

Conventionally, there has been known a technique that detects an object based on an image obtained by imaging a surrounding. Patent Literature 1 describes a technique for estimating a three-dimensional position of an object based on a plurality of image data obtained by imaging the object to be used using a plurality of cameras.

Citation List

Patent Literature

PTL 1: JP 2018-194891 A

Summary of Invention

Technical Problem

In a case where a plurality of cameras are respectively connected with a plurality of calculation resources instead of a single calculation resource, to estimate a three-dimensional position of an object to be imaged, it is necessary to put together total image data to a specified calculation resource. For example, in a case where total image data cannot be put together to the specified calculation resource from other calculation resources due to a capacity of a transmission path, a storage capacity or the like, the technique described in patent literature 1 has a drawback that a three-dimensional position of an object to be imaged cannot be estimated.

It is an object of the present invention to provide an image processing device capable of estimating a three-dimensional position of an object to be imaged using a data transmission quantity smaller than total image data.

Solution to Problem

An image processing device according to one aspect of the present invention includes an arithmetic operation device. The arithmetic operation device detects an object for each of a plurality of images imaged by a plurality of cameras, estimates a distance to the object for each of the plurality of images, determines a feature point that can be acquired in any of the plurality of images among feature points of the object using the estimated distance to the object for each of the plurality of images and camera parameters of the plurality of cameras, obtains a feature amount around the determined feature point for each of the plurality of images, collates feature amounts of the plurality of images, and measures the distance to the object based on a result of collating the feature amounts.

Advantageous Effects of Invention

According to the present invention, it is possible to provide an image processing device capable of estimating a three-dimensional position of a subject to be imaged with a data transmission amount smaller than a data transmission amount when all image data are transmitted.

Brief Description of Drawings

[FIG. 1] FIG. 1 is a block diagram schematically illustrating a hardware configuration of an image processing device according to a first embodiment of the present invention.
[FIG. 2] FIG. 2 is a block diagram schematically illustrating a hardware configuration of a first arithmetic operation unit.
[FIG. 3] FIG. 3 is a plan view illustrating an example in which the image processing device according to the first embodiment of the present invention is mounted on a vehicle.
[FIG. 4] FIG. 4 is a block diagram schematically illustrating a configuration of the image processing device according to the first embodiment of the present invention.

[FIG. 5] FIG. 5 is a schematic view illustrating a surface observed from a camera.

[FIG. 6] FIG. 6 is a schematic view illustrating a vehicle coordinate system.

[FIG. 7] FIG. 7 is a schematic view illustrating images imaged by a first camera and a second camera.

[FIG. 8] FIG. 8 is a flowchart of a program executed by an arithmetic operation device according to the first embodiment.

[FIG. 9] FIG. 9 is a flowchart of a program executed by an arithmetic operation device according to a second embodiment.

[FIG. 10] FIG. 10 is a block diagram schematically illustrating a configuration of an image processing device according to a third embodiment of the present invention.

[FIG. 11] FIG. 11 is a schematic diagram illustrating the manner in which a two-dimensional bounding box is divided into a plurality of regions.

[FIG. 12] FIG. 12 is a flowchart of a program executed by the arithmetic operation device according to the third embodiment.

[FIG. 13] FIG. 13 is a block diagram schematically illustrating a configuration of an image processing device according to a fourth embodiment of the present invention.

Description of Embodiments

<First embodiment>

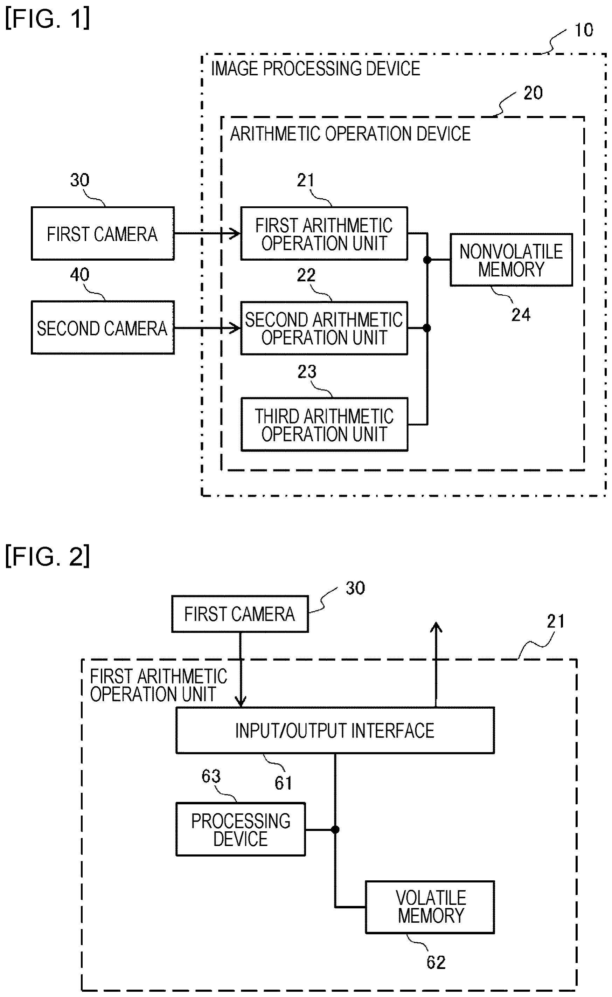

An image processing device according to a first embodiment of the present invention will be described with reference to FIG. 1 to FIG. 8.

FIG. 1 is a block diagram schematically illustrating a hardware configuration of an image processing device according to a first embodiment of the present invention. The image processing device 10 includes an arithmetic operation device 20. The arithmetic operation device 20 includes a first arithmetic operation unit 21, a second arithmetic operation unit 22, a third arithmetic operation unit 23, and a nonvolatile memory 24. The first arithmetic operation unit 21, the second arithmetic operation unit 22, the third arithmetic operation unit 23, and the nonvolatile memory 24 are mutually connected with each other by, for example, a data bus or the like. A first camera 30 disposed outside the image processing device 10 is connected with the first arithmetic operation unit 21. A second camera 40 disposed outside the image processing device 10 is connected with the second arithmetic operation unit 22.

The first arithmetic operation unit 21, the second arithmetic operation unit 22, and the third arithmetic operation unit 23 are each formed of a calculation resources such as systems on chip (SOC), for example. The configurations of the first arithmetic operation unit 21, the second arithmetic operation unit 22, and the third arithmetic operation unit 23 will be described in detail later.

The nonvolatile memory 24 is a storage medium such as a read only memory (ROM), a flash memory, or a hard disk drive. The nonvolatile memory 24 stores a program capable of executing various arithmetic operations. That is, the nonvolatile memory 24 is a storage medium (storage device) capable of reading a program for realizing the functions of the present embodiment. The nonvolatile memory 24 further stores information regarding mounting positions and mounting angles of the first camera 30 and the second camera 40, and camera specifications (focal lengths, optical center positions, lens distortions, and the like) of the cameras in the form of, for example, an external parameter matrix, an internal parameter matrix, or the like. The first arithmetic operation unit 21, the second arithmetic operation unit 22, and the third arithmetic operation unit 23 read these information regarding the first camera 30 and the second camera 40 from the nonvolatile memory 24, and use these information for a control described later.

FIG. 2 is a block diagram schematically illustrating a hardware configuration of the first arithmetic operation unit 21. The first arithmetic operation unit 21 includes: a processing device 63 such as a central processing unit (CPU), a micro processing unit (MPU), and a digital signal processor (DSP); a volatile memory 62 referred to as a random access memory (RAM); an input/output interface 61; and other peripheral circuits. These hardware operate software stored in the nonvolatile memory 24 (FIG. 1) in a cooperative manner so as to implement a plurality of functions. The first arithmetic operation unit 21 may be constituted of one computer or a plurality of computers. As the processing device 63, an application specific integrated circuit (ASIC), a field programmable gate array (FPGA), or the like can be used.

The processing device 63 is a device that develops a program stored in the nonvolatile memory 24 (FIG. 1) in the volatile memory 62 and executes an arithmetic operation. The processing device 63 performs predetermined arithmetic operation processing on data taken in from the input/output interface 61, the nonvolatile memory 24, and the volatile memory 62 in accordance with the program. The processing device 63 is connected with each of the input/output interface 61 and the volatile memory 62.

An input unit of the input/output interface 61 converts signals input from various devices (the first camera 30 and the like) into data that can be subjected to an arithmetic operation by the processing device 63. The output unit of the input/output interface 61 generates a signal for output according to the arithmetic operation result obtained by the processing device 63, and outputs the signal to various devices (the third arithmetic operation unit 23 and the like).

Note that the hardware configurations of the second arithmetic operation unit 22 and the hardware configurations of the third arithmetic operation unit 23 are the same as the hardware configuration of the first arithmetic operation unit 21. Accordingly, the description and the illustration of the hardware configurations of the second arithmetic operation unit 22 and the third arithmetic operation unit 23 are omitted.

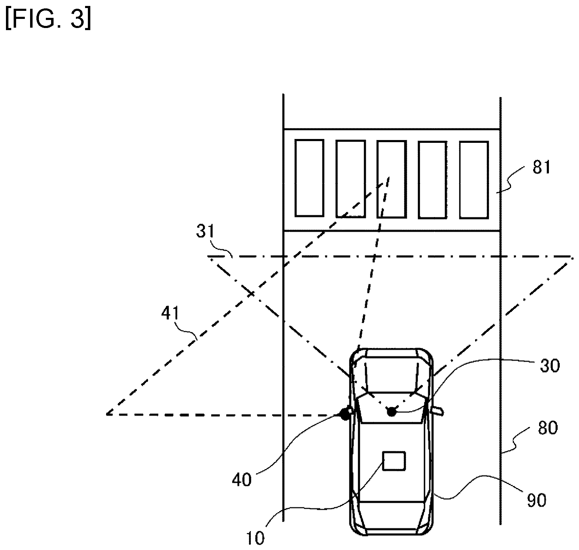

FIG. 3 is a plan view illustrating an example in which the image processing device 10 according to the first embodiment of the present invention is mounted on a vehicle. The image processing device 10 is installed in a vehicle 90 traveling on a road 80. The first camera 30 is installed in a cabin of the vehicle 90. For example, the first camera 30 is disposed at a position near a room mirror where the first camera 30 can image an image in front of the vehicle 90 (a range including a region 31 illustrated in FIG. 3). The second camera 40 is installed at a position near a door mirror. For example, the second camera 40 is disposed at a position near a door mirror where the second camera 40 can image a region on a left side and in front of the vehicle 90 (a range including a region 41 illustrated in FIG. 3). It is assumed that an imaging range of the first camera 30 and the imaging range of the second camera 40 overlap with each other at least partially. In the description made hereinafter, it is assumed that there is a crosswalk 81 in front of the vehicle 90. It is also assumed that a part of the crosswalk 81 overlaps with the imaging range of the first camera 30 and the imaging range of the second camera 40.

The image processing device 10 estimates and acquires information on an object existing around the vehicle 90. The object that forms a processing target may be a moving object (for example, a pedestrian, a vehicle, or the like) or a stationary object (for example, a white line, a road surface, a sign, a building, or the like). The information on the object to be estimated is, for example, a kind of the object, a distance from the vehicle 90 to the object, a size and a moving speed of the object, and the like. The acquired information on the object is used for determining a control valuable of the vehicle 90, for example. That is, such information is used for automatic driving and driving support of the vehicle 90.

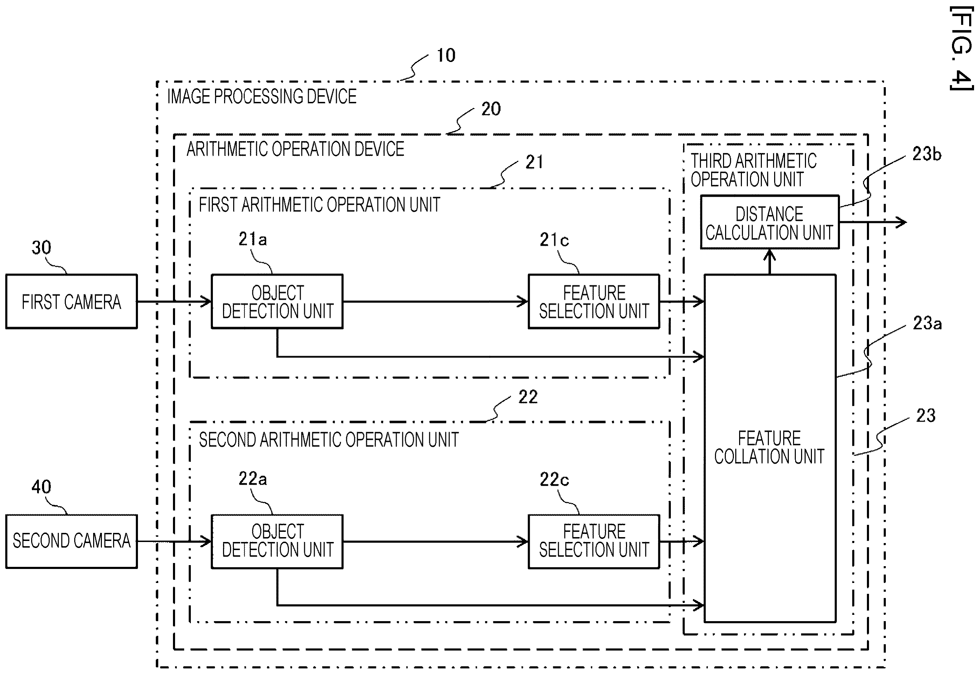

FIG. 4 is a block diagram schematically illustrating the configuration of the image processing device 10 according to the first embodiment of the present invention. The first arithmetic operation unit 21 includes an object detection unit 21a and a feature selection unit 21c. The second arithmetic operation unit 22 includes an object detection unit 22a and a feature selection unit 22c. The third arithmetic operation unit 23 includes a feature collation unit 23a and a distance calculation unit 23b.

The first camera 30 transmits an image signal of the imaged image to the object detection unit 21a in the first arithmetic operation unit 21. The object detection unit 21a analyzes the imaged image (image signal), so as to detect a target object. The object detection unit 21a approximates the detected object into a rectangular parallelepiped body model. That is, the object detection unit 21a expresses the position, the orientation, and the size of the detected object by a three-dimensional rectangular parallelepiped body that embraces the detected object. The rectangular parallelepiped body model is a formula suitable for representing an object such as a vehicle, for example. The object detection unit 21a outputs the detection result information to the feature selection unit 21c and the feature collation unit 23a in the third arithmetic operation unit 23. The detection result information in the first embodiment includes three-dimensional coordinates in the world coordinate system of respective vertices constituting a bounding box that is a three-dimensional rectangular parallelepiped body that embraces the detected object. The state that the three-dimensional bounding box is expressed by three-dimensional coordinates in the world coordinate system means that the detection result information also includes information on the distance from the first camera 30 to the detected object. That is, in the first embodiment, the object detection unit 21a not only detects an object but also simultaneously estimates the distance to the object.

The object detection unit 21a is configured to be able to simultaneously detect a plurality of objects from one imaged image. Therefore, the detection result information includes information regarding one or a plurality of bounding boxes.

The object detection unit 21a detects an object by performing inference using, for example, a well-known neural network model. As such a network model, for example, YOLO or the like is known.

The feature selection unit 21c selects, with respect to each objects detected by the object detection unit 21a from the first camera 30, an image feature of the object from the imaged image that the first camera 30 outputs. In the first embodiment, an image feature refers to positions of feature points provided in an image of a detected object and an image feature amount obtained from pixels around the positions. The feature selection unit 21c cuts out a partial image from an imaged image that the first camera 30 outputs, and searches for image coordinates (that is, feature points) having high image features such as corners from the partial image. Then, with respect to each of the found feature points, the feature selection unit 21c obtains an image feature amount from the pixels around the position. As a technique for searching feature points and for acquiring image feature amounts, a scale invariant feature transform (SIFT), an oriented fast and rotated brief (ORB), and the like can be used. A technique that performs feature quantization using deep learning may be also adopted. A method of cutting out a partial image by the feature selection unit 21c will be described in detail later.

The feature selection unit 21c outputs the image feature information to the feature collation unit 23a in the third arithmetic operation unit 23. The image feature information in the first embodiment includes positions of a plurality of feature points and image feature amounts for each detected object. In general, a total of a data amount of the positions of a plurality of feature points and a data amount of image feature amounts is smaller than a data amount of image data of an object. That is, a data amount of image feature information that the feature selection unit 21c outputs is smaller than a data amount of image data of a detected object in a case where such image data of the detected object is directly outputted.

The second camera 40 transmits an image signal of an imaged image to the object detection unit 22a in the second arithmetic operation unit 22. The object detection unit 22a and the feature selection unit 22c that the second arithmetic operation unit 22 includes respectively function substantially in the same manner as the object detection unit 21a and the feature selection unit 21c that the first arithmetic operation unit 21 includes except that the imaged image that is imaged by the second camera 40 is targeted.

As described above, detection result information and image feature information are transmitted from the first arithmetic operation unit 21 and the second arithmetic operation unit 22 to the third arithmetic operation unit 23. A data amount of these information is smaller than the sum of a data amount of an imaged image outputted from the first camera 30 and a data amount of an imaged image outputted from the second camera 40. Accordingly, a data amount required for data communication performed between the first arithmetic operation unit 21, the second arithmetic operation unit 22, and the third arithmetic operation unit 23 is smaller than a corresponding data amount in a case where imaged images of all cameras are aggregated into the third arithmetic operation unit 23. In other words, a communication capacity of a communication path provided between the first arithmetic operation unit 21, the second arithmetic operation unit 22, and the third arithmetic operation unit 23 can be made small compared with a corresponding communication capacity in a case where imaged images of all cameras are aggregated in the third arithmetic operation unit 23.

The feature collation unit 23a collates image feature information outputted from the first arithmetic operation unit 21 with image feature information outputted from the second arithmetic operation unit 22, and outputs a collation result to the distance calculation unit 23b. A method of collating image feature information using the feature collation unit 23a will be described in detail later.

When it is determined that an object detected by the object detection unit 21a in the first arithmetic operation unit 21 and an object detected by the object detection unit 22a in the second arithmetic operation unit 22 are the same object as a result of collation performed by the feature collation unit 23a, the distance calculation unit 23b calculates and outputs a distance to the object. A method of calculating the distance by the distance calculation unit 23b will be described in detail later.

A processing of cutting out a partial image by the feature selection unit 21c will be described hereinafter. The feature selection unit 21c specifies, out of all six surfaces of a rectangular parallelepiped body that approximates a detected object, surfaces that can be observed by both the first camera 30 and the second camera 40. In approximating an object by a rectangular parallelepiped model, out of all six surfaces constituting the rectangular parallelepiped body, three surfaces at maximum are projected on an imaged image. First, the feature selection unit 21c checks which surfaces of the object have been observed based on an image imaged by the first camera 30. Since what is detected is an object, at least one surface must be observed in this processing.

Next, the feature selection unit 21c predicts how those surfaces are observed by the other camera, that is, the second camera 40. The feature selection unit 21c predicts how those surfaces are observed by the second camera 40 using geometric information of the first camera 30 and the second camera 40 and detection result information (for example, information of vertices constituting a bounding box of the object) outputted by the object detection unit 21a. For example, out of the six surfaces constituting the rectangular parallelepiped body, it can be determined that a surface that is blocked by another surface as viewed from the second camera 40 cannot be observed by the second camera 40. Further, in a case where a certain surface is parallel to an optical axis of the second camera 40, it can be determined that the surface cannot be observed by the second camera 40.

The geometric information of the first camera 30 and the second camera 40 used in this processing is information relating to mounting positions and mounting angles of the first camera 30 and the second camera 40, and the specification (focal lengths, optical center positions, lens distortions, and the like) of the first camera 30 and the second camera 40. The geometric information of the first camera 30 and the second camera 40 is stored in the nonvolatile memory 24 in advance.

The feature selection unit 21c specifies (observable) surfaces observed by both the first camera 30 and the second camera 40, and cuts out a partial image that includes all such surfaces from an imaged image of the first camera 30. Then, the feature selection unit 21c searches for feature points and acquires image feature amounts in the cut-out partial image.

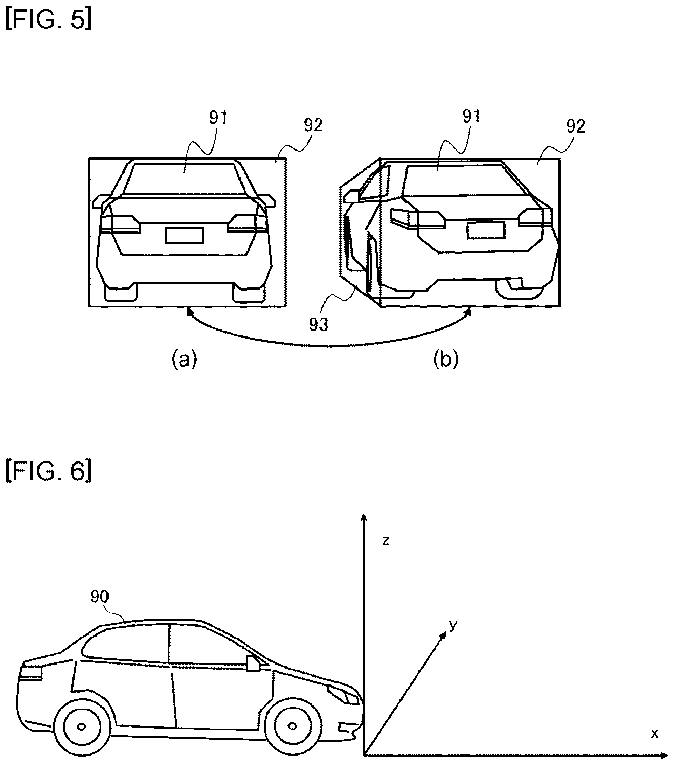

FIG. 5 is a schematic view illustrating surfaces observed from cameras. As illustrated in FIG. 5 (a), only a back surface 92 of a bounding box that surrounds a vehicle 91 is observed from the first camera 30. As illustrated in FIG. 5 (b), the back surface 92 and a left side surface 93 of the bounding box that surrounds the vehicle 91 are observed from the second camera 40. In this case, the feature selection unit 21c cuts out a partial image of the back surface 92 from the imaged image of the first camera 30, and searches for feature points and acquires image feature amounts with respect to this partial image. That is, the feature selection unit 21c searches for a feature point and acquires an image feature amount from the back surface 92 of the vehicle 91. The feature selection unit 22c of the second arithmetic operation unit 22 also performs substantially the same prediction as the feature selection unit 21c of the first arithmetic operation unit 21, and the feature selection unit 22c also searches for a feature point and acquires an image feature amount from the back surface 92 of the vehicle 91. Therefore, a feature point outputted from the first arithmetic operation unit 21 and a feature point outputted from the second arithmetic operation unit 22 are highly likely to be matched with each other. At least, useless feature points that are searched only by one of the first arithmetic operation unit 21 and the second arithmetic operation unit 22 (can be observed from only one camera) and cannot be absolutely correctly matched with each other are excluded.

A method of collating image feature information using the feature collation unit 23a will be described hereinafter. The simplest method is a method where a plurality of image feature amounts acquired from one imaged image and a plurality of image feature amounts acquired from the other imaged image for a certain object are matched with each other in a round-robin manner to search for a pair of image feature amounts that are sufficiently similar to each other. However, in such processing, the number of combinations of image feature amounts becomes enormous and hence, a calculation amount becomes large. There also exists a high possibility of occurrence of erroneous matching where feature points that are definitely different from each other are determined to be the same point.

On the other hand, it is known that the same position that appears in both imaged images can be efficiently searched using an equation called an epipolar constraint equation. In the epipolar constraint expression, in a case where two-dimensional coordinates in which a certain position is imaged are given in one imaged image, a place where there is a possibility that the same position is imaged in the other imaged image is given by a straight line (epipolar line). That is, a condition is given that it is unnecessary to search the same position from the entirety of the other imaged image, and it is sufficient to search only the epipolar line. For example, with respect to a certain object, an epipolar line is obtained by an epipolar constraint equation with respect to one feature point searched from one imaged image. Then, from a plurality of feature points searched from the other imaged image with respect to the same object, only the feature points present on the epipolar line are extracted. Then, it is sufficient that, with respect to each the extracted feature points, the above-mentioned matching between the one feature point and the image feature amount may be performed. The basic matrix used in the epipolar constraint expression is derived from an external parameter matrix and an internal parameter matrix of the first camera 30 and an external parameter matrix and an internal parameter matrix of the second camera 40. These parameter matrices are stored in the nonvolatile memory 24 in advance.

In addition, if preprocessing known as parallelization is performed with respect to a pair of imaged images in advance by appropriately using the parameter matrix described above, it is possible to convert these imaged images into images where the same point in the world coordinate system is arranged at the same height in both of two imaged images. By inputting the pair of images that are parallelized in this manner to the first arithmetic operation unit 21 and the second arithmetic operation unit 22 instead of the imaged image, the feature points corresponding to the same point have the same value with respect to the values in the vertical direction of the two-dimensional coordinates. Accordingly, the searching of the same position can be performed by relatively simple processing. This is the principle of a parallel stereo camera. In any case, the collation of the image feature information by the feature collation unit 23a can be performed based on information such as parameters and installation conditions of two cameras.

A method of calculating a distance by the distance calculation unit 23b will be described in detail hereinafter.

FIG. 6 is a schematic view illustrating a vehicle coordinate system. In the following description, a traveling direction of the vehicle 90 is taken on an x-axis, a horizontal direction (width direction) of the vehicle 90 is taken on a y-axis, and a vertical direction of the vehicle 90 is taken on a z-axis.

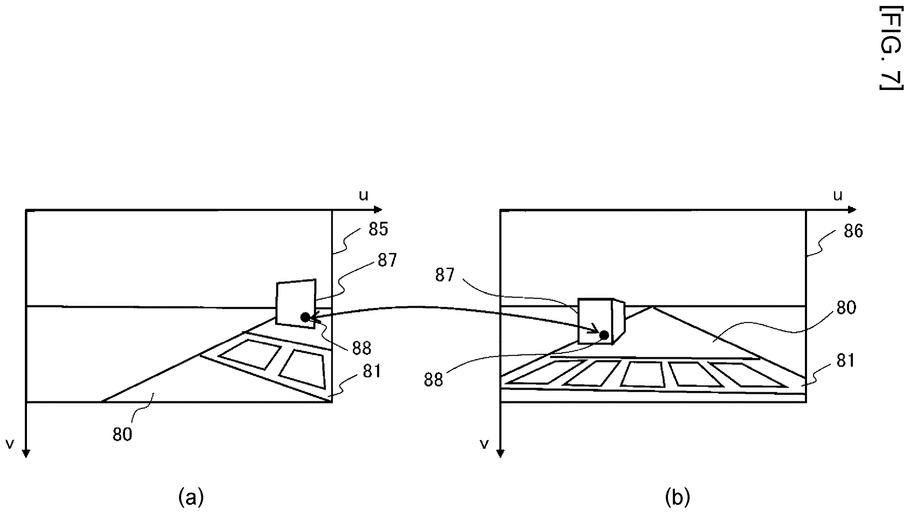

FIG. 7 is a schematic view illustrating images imaged by the first camera 30 and the second camera 40. An image 86 imaged by the first camera 30 is an image that images a region in front of a vehicle 90. An image 85 imaged by the second camera 40 is an image that images a left side of the region in front of the vehicle 90. In the description made hereinafter, the two-dimensional coordinates in the imaged image 85 and the imaged image 86 are referred to as (u, v). As illustrated in FIG. 7, the right direction of the imaged image 85 and the imaged image 86 is +u, and the downward direction of the imaged image 85 and the imaged image 86 is +v.

As an example of a method for estimating a distance from the vehicle 90 to an object, there has been known a method where the same object is imaged by a plurality of cameras and measured by the principle of triangulation. Assuming that an arbitrary point in the world coordinate system existing on the road 80 is $X = (x, y, z, 1)^T$ in the homogeneous coordinate system, that an external parameter matrix relating to a rotation angle of the camera is R, that an external parameter matrix relating to an installation position of the camera is T, that an external parameter matrix is $P = (R|T)$, that an internal parameter matrix that manages an internal state such as a focal length or an optical center of the camera is K, that image coordinates in which the point indicated by X is imaged is $U = (u, v, 1)^T$ in the homogeneous coordinate system, and that a scale parameter is s, the following equations (1) and (2) are established with respect to the first camera 30 and the second camera 40. Note that a perspective projection model is assumed in this processing. Further, a subscript on the symbol indicates the type of camera. That is, each symbol having the subscript 0 represents a symbol relating to the first camera 30, and each symbol having the subscript 1 represents a symbol relating to the second camera 40.

[Expression 1]

$$s_0 U_0 = K_0 P_0 X \quad \cdots (1)$$
$$s_1 U_1 = K_1 P_1 X \quad \cdots (2)$$

In a case where the two-dimensional coordinates of the point X (one point in the world coordinate system corresponding to one point on an object) in the imaged image 85 of the first camera 30 are $U_0$, and the two-dimensional coordinates of the point X in the imaged image 86 of the second camera 40 are $U_1$, the three-dimensional coordinates of the point X can be calculated by solving a least squares method using, for example, the following equation (3).
[Expression 2]

$$\begin{pmatrix} R_0 & -K_0^{-1} U_0 & 0 \\ R_1 & 0 & -K_1^{-1} U_1 \end{pmatrix} \begin{pmatrix} X \\ s_0 \\ s_1 \end{pmatrix} = -\begin{pmatrix} T_0 \\ T_1 \end{pmatrix} \quad \cdots (3)$$

The distance calculation unit 23b calculates a distance to the object by solving the least squares method using the above equation (3). For example, a feature point 88 that is searched with respect to an object 87 illustrated in FIG. 7 is observed in both the imaged image 85 illustrated in FIG. 7(a) and the imaged image 86 illustrated in FIG. 7(b). The feature point 88 is a point indicating the same place of the object 87. In other words, the feature points 88 have the same three-dimensional coordinates in the world coordinate system. In this case, the two-dimensional coordinates of the feature point 88 in the imaged image 85 illustrated in FIG. 7(a) are $U_0$, and the two-dimensional coordinates of the feature point 88 in the imaged image 86 illustrated in FIG. 7(b) are $U_1$. The distance calculation unit 23b calculates the distance from the vehicle 90 to the object 87 detected in front of the vehicle 90 by applying the values of these two-dimensional coordinates to the above equation (3) and by solving the least squares method.
The basic matrix F used in the epipolar constraint expression is derived from an external parameter matrix and an internal parameter matrix of the first camera 30 and an external parameter matrix and an internal parameter matrix of the second camera 40. The basic matrix F is expressed by the following expression (4).
[Expression 3]

$$U_0 F U_1 = 0 \quad \cdots (4)$$

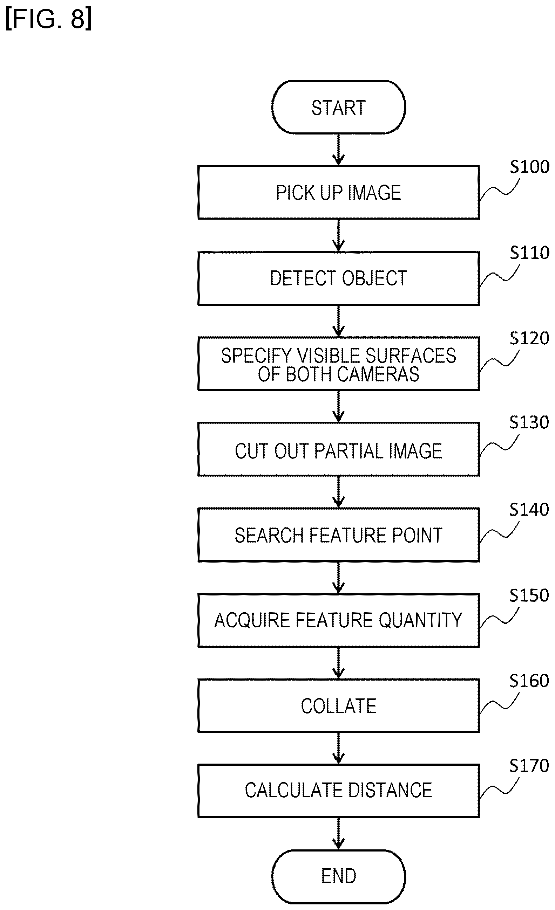

FIG. 8 is a flowchart of a program executed by the arithmetic operation device 20. The processing shown in FIG. 8 is realized by allowing the arithmetic operation device 20 (first arithmetic operation unit 21, second arithmetic operation unit 22, and third arithmetic operation unit 23) to read and execute a predetermined program stored in the nonvolatile memory 24.
In step S100, the first arithmetic operation unit 21 and the second arithmetic operation unit 22 make the first camera 30 and the second camera 40 image images. An imaged image acquired by the first camera 30 is transmitted to the object detection unit 21a in the first arithmetic operation unit 21 as an image signal. An imaged image acquired by the second camera 40 is transmitted to the object detection unit 22a in the second arithmetic operation unit 22 as an image signal.
In step S110, the object detection unit 21a detects one or more objects from the image imaged by the first camera 30, and the object detection unit 22a detects one or more objects from the image imaged by the second camera 40.
In step S120, the feature selection unit 21c in the first arithmetic operation unit 21 specifies the surface observed from both the first camera 30 and the second camera 40 for each detected object based on the result of the object detection obtained by the object detection unit 21a (detection result information) and the information relating to the first camera 30 and the second camera 40 stored in the nonvolatile memory 24. In other words, the feature selection unit 21c specifies a surface visible from both the first camera 30 and the second camera 40.
Further, in step S120, the feature selection unit 22c in the second arithmetic operation unit 22 also specifies the surface observed from both the first camera 30 and the second camera 40 for each detected object based on the result of the object detection obtained by the object detection unit 22a (detection result information) and the information about the first camera 30 and the second camera 40 stored in the nonvolatile memory 24. In other words, the feature selection unit 22c specifies a surface visible from both the first camera 30 and the second camera 40.

In step S130, the feature selection unit 21c cuts out a partial image corresponding to the surface specified in step S120 from the image imaged by the first camera 30. Further, the feature selection unit 22c cuts out a partial image corresponding to the surface specified in step S120 from the image imaged by the second camera 40.

In step S140, the feature selection unit 21c searches for feature points such as SIFT and ORB from the partial image cut out in step S130. Further, the feature selection unit 22c searches for feature points such as SIFT and ORB from the partial image cut out in step S130.

In step S150, the feature selection unit 21c acquires image feature amounts such as SIFT and ORB for each of the feature points searched in step S140. Further, the feature selection unit 22c acquires image feature amounts such as SIFT and ORB for each of the feature points searched in step S140.

In step S160, the feature collation unit 23a in the third arithmetic operation unit 23 collates the image feature amounts of the plurality of feature points searched by the feature selection unit 21c in step S140 with the image feature amounts of the plurality of feature points searched by the feature selection unit 22c in step S140. That is, the feature collation unit 23a, for each pair of feature points that may indicate the same point, compares the image feature amounts corresponding to the feature points with each other, checks whether the image feature amounts are sufficiently similar (close), and specifies the pair of feature amounts indicating the same point.

In step S170, the distance calculation unit 23b puts the result of the collation in step S160 into the above expression (3) and calculates the distance to the object detected in step S110 by solving the least squares method.

According to the first embodiment described above, the manner of operation and the advantageous effects can be acquired.

(1) The arithmetic operation device 20 detects an object for each of the plurality of images imaged by the plurality of cameras (the first camera 30 and the second camera 40), and estimates a distance to an object for each of the plurality of images. The arithmetic operation device 20, by using the estimated distance to the object for each of the plurality of images and the camera parameters of the plurality of cameras (the first camera 30 and the second camera 40), determines feature points that can be acquired in any of the plurality of images among the feature points of the object. The arithmetic operation device 20 obtains a feature amount around the feature point determined for each of the plurality of images, and collates the feature amounts of the plurality of images with each other. The arithmetic operation device 20 measures the distance to the object based on the result of collation of the feature amounts. by performing such processing, in a case where the arithmetic operation device 20 is constituted of a plurality of calculation resources, it is possible to estimate a three-dimensional position of an object to be imaged with a data transmission amount smaller than a data transmission amount when all image data is transmitted.

(2) The arithmetic operation device 20 obtains a three-dimensional bounding box surrounding an object for each of a plurality of images. The arithmetic operation device 20 determines target surfaces that can be imaged by a plurality of cameras (the first camera 30 and the second camera 40) among a plurality of surfaces constituting the bounding box. The arithmetic operation device 20 obtains a feature amounts around feature points included in the target surfaces. With such processing, it is possible to eliminate feature points in a place observed only from a specific camera and hence, the allocation accuracy of the feature points can be enhanced.

(3) The arithmetic operation device 20 includes a first arithmetic operation unit 21 (first arithmetic operation resource) to which the first camera 30 is connected and a second arithmetic operation unit 22 (second arithmetic operation resource) to which the second camera 40 is connected. Each of the first arithmetic operation unit 21 (first arithmetic operation resource) and the second arithmetic operation unit 22 (second arithmetic operation resource) detects an object, estimates a distance to the object, determines feature points, and obtains feature amounts around the determined feature points. By performing such processing, it is possible to estimate a three-dimensional position of an object to be imaged with a data transmission amount smaller than a data transmission amount when all image data is transmitted.

<Second embodiment>

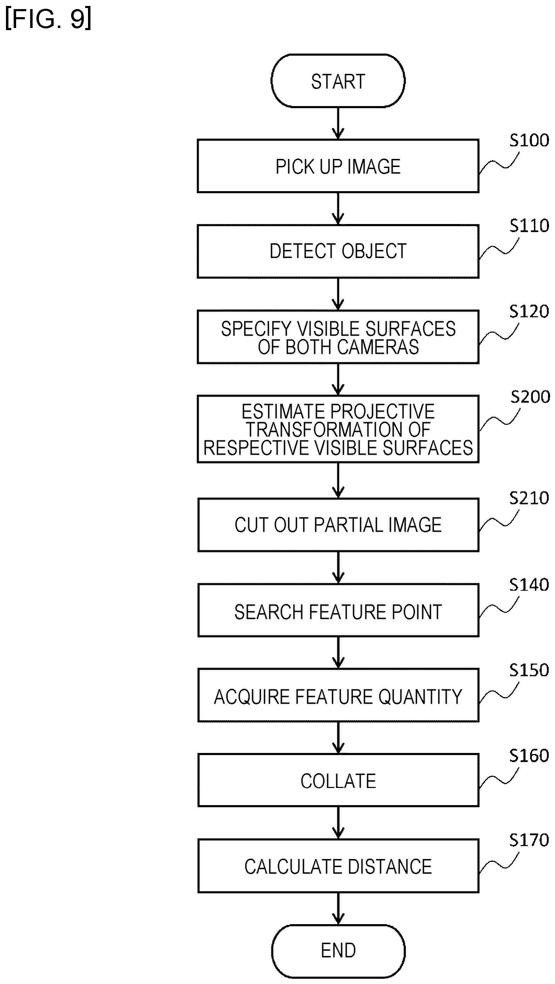

An image processing device 10 according to a second embodiment of the present invention will be described with reference to FIG. 9. The components identical with or corresponding to the components described in the first embodiment will be denoted by the same reference signs, and points that make the second embodiment differ from the first embodiment will be mainly described.

FIG. 9 is a view substantially equal to FIG. 8, and is a flowchart of a program executed by an arithmetic operation device 20 according to the second embodiment. In the flowchart of FIG. 9, instead of the processing in step S130 in the flowchart illustrated in FIG. 8, the processing in step S200 and the processing in step S210 are executed.

In step S200, with respect to all surfaces that are specified in step S120 (all surfaces observed from both cameras) by the feature selection unit 21c, a projective transformation matrix from the surface in the imaged image of the first camera 30 to the surface in the imaged image of the second camera 40 is estimated. The projective transformation matrix is a matrix including a total of nine scalar values of three rows and three columns. However, the value of one of the scalar values is "1" and is fixed and hence, the projective transformation matrix can be regarded as an eight-parameter matrix. It is known that the projective transformation matrix can be estimated from an external parameter matrix and an internal parameter matrix of the first camera 30 and an external parameter matrix and an internal parameter matrix of the second camera 40.

In step S200, in parallel with the above processing, the feature selection unit 22c in the second arithmetic operation unit 22 also executes similar processing. That is, with respect to all surfaces that are specified in step S120 (all surfaces observed from both cameras) by the feature selection unit 22c, a projective transformation matrix from the surface in the imaged image of the first camera 30 to the surface in the imaged image of the second camera 40 is estimated.

In step S210, with respect to one surface having the smallest degree of deformation between the cameras among the surfaces specified in step S120 (all surfaces observed from both cameras), a partial image corresponding to such one surface is cut out from the image imaged by the first camera 30. The degree of deformation between the cameras can be calculated based on the projective transformation matrix estimated in step S200. For example, a matrix norm such as Frobenius norm is calculated with respect to the projective transformation matrix corresponding to each surface, and the value is treated as a value indicating the "degree of deformation between the cameras". In this case, a surface having the smallest matrix norm value is set as a surface from which a partial image is cut out.

In step S210, in parallel with the above processing, the feature selection unit 22c in the second arithmetic operation unit 22 also executes similar processing. That is, with respect to one surface having the smallest degree of deformation between the cameras among the surfaces that the feature selection unit 22c specified in step S120 (all surfaces observed from both cameras), a partial image corresponding to such one surface is cut out from the image imaged by the second camera 40.

The reason why the partial image corresponding to the surface having the smallest degree of deformation between the cameras is cut out is as follows. That is, in a case where the degree of deformation is large, even with respect to image features acquired from the same point, there is a high possibility that these image features cannot be collated with each other. That is, the image features acquired in a portion where the degree of deformation between the cameras is small exhibit the higher degree of accuracy of collation and hence, the collation accuracy can be enhanced by preferentially selecting such a portion.

According to the second embodiment described above, the manner of operation and the advantageous effects described hereinafter can be acquired.

(1) The arithmetic operation device 20 obtains a three-dimensional bounding box that surrounds an object with respect to each of a plurality of images, and estimates projective transformation between images imaged by a plurality of cameras (the first camera 30 and the second camera 40) with respect to a plurality of surfaces that constitute the bounding box. The arithmetic operation device 20 determines a target surface from which feature points are acquired based on the estimated degree of deformation in the projective transformation of the plurality of surfaces, and obtains feature amounts around the feature points included in the target surface. With such processing, the collation accuracy can be enhanced.

<Third embodiment>

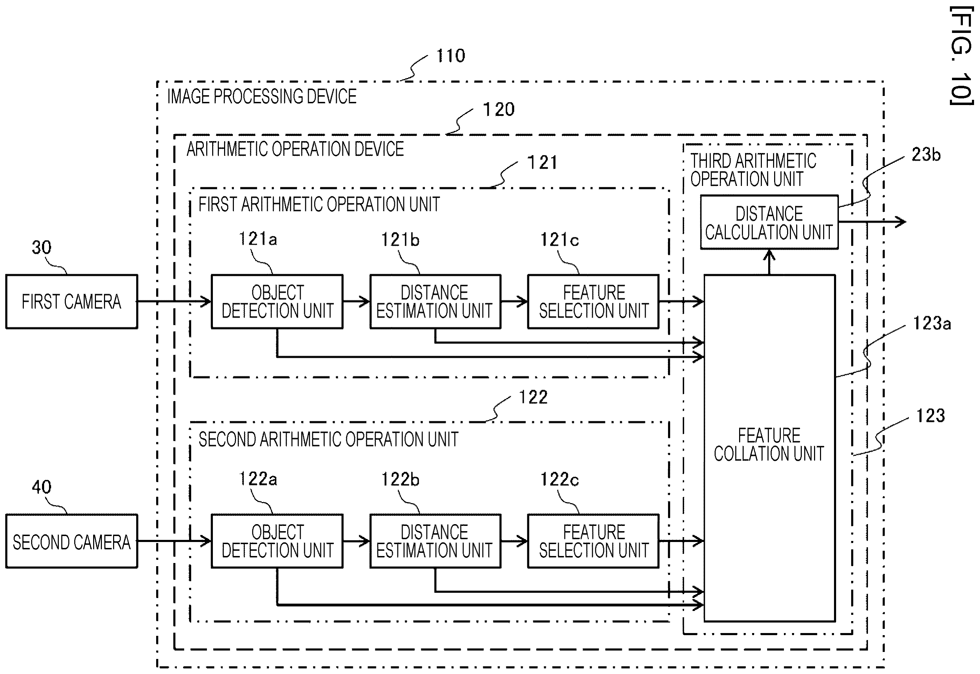

An image processing device 110 according to a third embodiment of the present invention will be described with reference to FIG. 10 to FIG. 12. The components identical with or corresponding to the components described in the first embodiment will be denoted by the same reference signs, and points that make the second embodiment differ from the first embodiment will be mainly described.

FIG. 10 is a view substantially equal to FIG. 4, and a block diagram schematically illustrating the configuration of the image processing device 110 according to the third embodiment of the present invention. The image processing device 110 according to the third embodiment illustrated in FIG. 10 includes an arithmetic operation device 120 instead of the arithmetic operation device 20. The arithmetic operation device 120 includes: a first arithmetic operation unit 121 instead of the first arithmetic operation unit 21; a second arithmetic operation unit 122 instead of the second arithmetic operation unit 22; and a third arithmetic operation unit 123 instead of the third arithmetic operation unit 23.

The first arithmetic operation unit 121 includes an object detection unit 121a, a distance estimation unit 121b, and a feature selection unit 121c. The object detection unit 121a adopts a two-dimensional rectangular model instead of a rectangular parallelepiped model. That is, the object detection unit 121a according to the third embodiment uses a two-dimensional bounding box that surrounds an object detected in the imaged image instead of the three-dimensional bounding box that surrounds the object detected in the world coordinate system. The detection result information in the third embodiment includes: an attribute of a detected object (for example, information indicating a type of the object such as a vehicle or a pedestrian); and two-dimensional coordinates in an imaged image of respective vertices that constitute a two-dimensional bounding box that surrounds the detected object in the imaged image.

The distance estimation unit 121b estimates a distance from a first camera 30 to the object that the object detection unit 121a detects. The distance estimation unit 121b estimates the distance to the object based on the detection result information outputted by the object detection unit 121a and conditions such as a geometric constraint.

The geometric constraint is obtained based on a geometric condition of the first camera 30 and a geometric condition of an environment that is observed. For example, an example in which an object to be detected is another vehicle will be described hereinafter. Assuming a road with which another vehicle is in contact as a plane of z = 0, a point at which another vehicle is in contact with the road is expressed by three-dimensional coordinates (x, y, 0). In a case where a mounting position and a mounting angle of the first camera 30, the specification of the first camera 30 and the like are known, it is possible to estimate at which position the point is to be imaged. When the position where another vehicle and the road are in contact with each other is found on the imaged image, three-dimensional coordinates (x, y, 0) of the mounting position in the world coordinate system can be calculated back. The mounting position and the mounting angle of the first camera 30, the specification of the first camera 30 and the like are namely an external parameter matrix and an internal parameter matrix of the first camera 30. The distance estimation unit 121b reads the external parameter matrix and the internal parameter matrix of the first camera 30 from a nonvolatile memory 24, and uses such parameter matrices for estimating a distance to an object.

Note that the method of estimating the distance using the distance estimation unit 121b is not limited to the above-described method. The distance estimation unit 121b outputs distance information to a feature selection unit 121c and a feature collation unit 123a in the third arithmetic operation unit 123. The distance information is, for example, information on a distance estimated for each object. The distance estimation unit 121b estimates a distance to an object even in a case where the object is other than another vehicle, for example, a pedestrian using a substantially same estimating method.

The feature selection unit 121c checks which position of the two-dimensional bounding box of the object is visible from both cameras and whether or not the degree of deformation between the cameras is small based on detected attributes of the object. That is, the feature selection unit 121c checks them based on the mounting positions, the mounting angles, the specifications, and the like of the first camera 30 and the second camera 40. Specifically, a two-dimensional bounding box of a detected object is divided into a plurality of regions, and the degree of deformation in each region is calculated. The feature selection unit 121c sets a region corresponding to a region that is visible and has a small degree of deformation among the respective regions as a partial image cutout target.

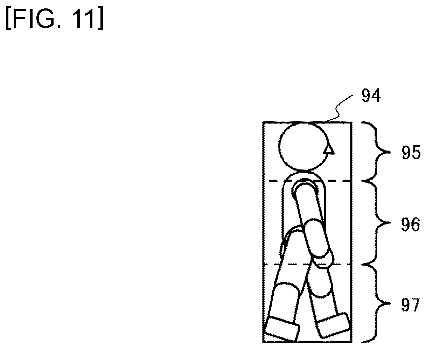

FIG. 11 is a schematic diagram illustrating the manner in which the two-dimensional bounding box is divided into a plurality of regions. FIG. 11 illustrates a case where an attribute of an object is a pedestrian. Assume a case where a two-dimensional bounding box 94 illustrated in FIG. 11 surrounds the pedestrian, by dividing the two-dimensional bounding box 94 into three regions at a predetermined ratio in the longitudinal direction, the two-dimensional bounding box 94 can be divided into three regions consisting of a region 95 that includes a head, a region 96 that includes a central portion, and a region 97 that includes legs. In this case, it is estimated that the region 96 in the central portion includes arms of the pedestrian, it is considered that a change with time of the region 96 is larger than a change with time in other regions. Accordingly, to realize the more reliable collation, the feature selection unit 121c sets the region 95 that includes the head or the region 97 that includes the legs exhibiting a less change with time as a cutout target of a partial image. In this manner, the feature selection unit 121c according to the third embodiment determines the position at which the feature point is acquired based on not only the detection result of the object but also information on the shape of the object where the type of the object and the degree of a change of the shape of the object with time are associated with each other.

A second arithmetic operation unit 122 illustrated in FIG. 10 includes an object detection unit 122a, a distance estimation unit 122b, and a feature selection unit 122c. These units have the same functions as the object detection unit 121a, the distance estimation unit 121b, and the feature selection unit 121c that the first arithmetic operation unit 121 includes and hence, the description of these units will be omitted.

A third arithmetic operation unit 123 includes a feature collation unit 123a instead of the feature collation unit 23a of the third arithmetic operation unit 23 illustrated in FIG. 4. The feature collation unit 123a executes substantially the same processing as the processing performed by the feature collation unit 23a of the first embodiment except that distance information outputted from a distance estimation unit 121b and the distance estimation unit 122b are used.

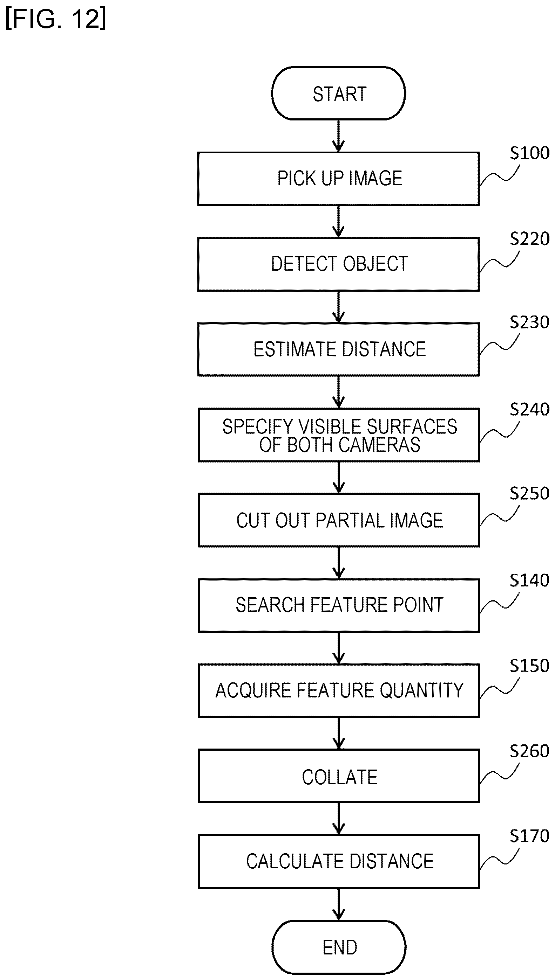

FIG. 12 is a view substantially equal to the flowchart illustrated in FIG. 8, and is a flowchart of a program executed by the arithmetic operation device 120 according to the third embodiment. In the flowchart illustrated in FIG. 12, the processing in steps S220 to S250 is executed instead of the processing in steps S110 to S130 in the flowchart illustrated in FIG. 8, and the processing in step S260 is executed instead of the processing in step S160.

In step S220, the object detection unit 121a detects one or more objects from an image imaged by the first camera 30, and the object detection unit 122a detects one or more objects from an image imaged by the second camera 40.

In step S230, the distance estimation unit 121b, based on the result of object detection by the object detection unit 121a (detection result information), estimates a distance from the first camera 30 to each detected object. Further, the distance estimation unit 122b, based on the result of object detection performed by the object detection unit 122a (detection result information), estimates a distance from the second camera 40 to each detected object.

In step S240, the feature selection unit 121c in the first arithmetic operation unit 121 specifies the surface observed from both the first camera 30 and the second camera 40 with respect to each detected object, based on the result of the object detection obtained by the object detection unit 121a (detection result information), the result of distance estimation by the distance estimation unit 121b (distance information), and the information relating to the first camera 30 and the second camera 40 stored in the nonvolatile memory 24. In other words, the feature selection unit 121c specifies a surface visible from both the first camera 30 and the second camera 40.

In step S240, the feature selection unit 122c in the second arithmetic operation unit 122 specifies the surface observed from both the first camera 30 and the second camera 40 for each detected object based on the result of the object detection obtained by the object detection unit 122a (detection result information), the result of distance estimation by the distance estimation unit 122b (distance information), and the information relating to the first camera 30 and the second camera 40 stored in the nonvolatile memory 24. In other words, the feature selection unit 122c specifies a surface visible from both the first camera 30 and the second camera 40.

In step S250, the feature selection unit 121c cuts out a partial image corresponding to a surface having a small degree of change with time among the surfaces that the feature selection unit 121c specifies from an imaged image obtained by the first camera 30 in step S240. Further, in step S250, the feature selection unit 122c cuts out a partial image corresponding to a surface having a small degree of change with time among the surfaces that the feature selection unit 122c specifies from an imaged image obtained by the second camera 40 in step S240.

In step S260, the feature collation unit 123a in the third arithmetic operation unit 123 collates the image feature amounts of the plurality of feature points searched by the feature selection unit 121c in step S140 with the image feature amounts of the plurality of feature points searched by the feature selection unit 122c in step S140.

According to the third embodiment described above, the manner of operation and the advantageous effects described hereinafter can be acquired.

(1) The arithmetic operation device 120 determines the position of the object where the feature point is acquired based on the detection result of the object and the object shape information where the type of the object is associated with the degree of change with time in the shape of the object. With such processing, the feature point can be acquired from an optimum place depending on the type of the object and hence, the collation accuracy is enhanced.

<Fourth embodiment>

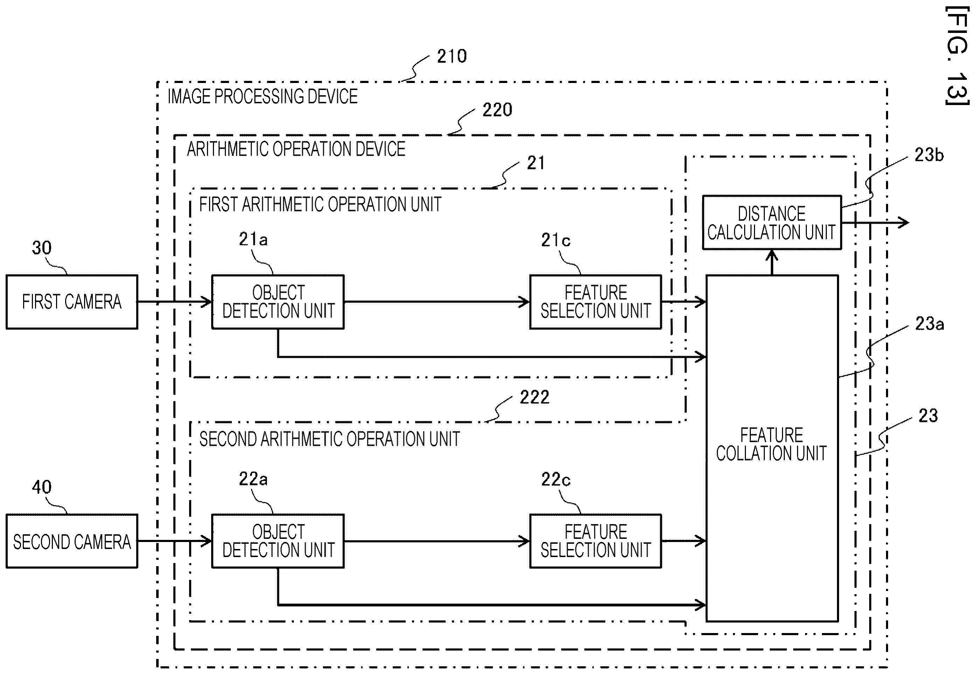

An image processing device 210 according to a fourth embodiment of the present invention will be described with reference to FIG. 13. The components identical with or corresponding to the components described in the first embodiment will be denoted by the same reference signs, and points that make the second embodiment differ from the first embodiment will be mainly described.

FIG. 13 is a view substantially equal to FIG, 4, and a block diagram schematically illustrating the configuration of the image processing device 210 according to the fourth embodiment of the present invention. The image processing device 210 according to the fourth embodiment illustrated in FIG. 13 includes an arithmetic operation device 220 instead of the arithmetic operation device 20. The arithmetic operation device 220 includes a second arithmetic operation unit 222 instead of the second arithmetic operation unit 22 and the third arithmetic operation unit 23.

The second arithmetic operation unit 222 is an integral body constituted of the second arithmetic operation unit 22 and the third arithmetic operation unit 23 illustrated in FIG. 4. That is, the second arithmetic operation unit 222 includes the object detection unit 22a, the feature selection unit 22c, the feature collation unit 23a, and the distance calculation unit 23b.

With such a configuration, the data transmission performed between the second arithmetic operation unit 22 and the third arithmetic operation unit 23 which are calculation resources independent from each other in the first embodiment is enclosed in the second arithmetic operation unit 222 that is a single calculation resource in the fourth embodiment. That is, the data transmission between calculation resources in the fourth embodiment is performed only between the first arithmetic operation unit 21 and the second arithmetic operation unit 222.

According to the fourth embodiment described above, the manner of operation and the advantageous effects described hereinafter can be acquired.

(1) The arithmetic operation device 220 includes the first arithmetic operation unit 21 (first calculation resource) to which the first camera 30 is connected and the second arithmetic operation unit 222 (second calculation resource) to which the second camera 40 is connected. Each of the first arithmetic operation unit 21 (first calculation resource) and the second arithmetic operation unit 222 (second calculation resource) detects an object, estimates a distance to the object, determines feature points, and obtains feature amounts around the determined feature points. By performing such processing, it is possible to estimate a three-dimensional position of an object to be imaged with a data transmission amount smaller than a data transmission amount when all image data is transmitted.

The following modifications are also within the scope of the present invention, and it is also possible to combine the configurations illustrated in the modifications with the configurations described in the above-described embodiments, to combine the configurations described in the above-described different embodiments, or to combine the configurations described in the following different modifications.

<Modification 1>

In each of the above-described embodiments, with respect to the plane observed from the camera, the possibility that another object exists between the camera and the object to be processed is not considered. The feature selection unit 21c and the feature selection unit 22c may be configured to determine whether or not the object to be processed is blocked by the detected other object. By adopting such a configuration, the surface that is observed only from one camera can be more reliably excluded and hence, the collation of the image features can be more reliably performed. Further, it is possible to exclude a feature point at which the collation of image features is never successful and hence, an amount of calculation required for collation can be reduced.

<Modification 2>

Methods other than the above-described SIFT and ORB may be used to acquire an image feature amount. For example, template matching may be used. The template matching is a technique where a periphery of image coordinates of interest is cut out from one imaged image in a small region such as a rectangle, and a region close to a pixel distribution in the rectangle is collated from the other imaged image using an appropriate cost function. Further, after the feature point is acquired by SIFT or ORB, instead of acquiring a feature amount by SIFT or ORB, a partial region of the image may be cut out from a region in the vicinity of the feature point, and collation may be performed by template matching. In this manner, even in a situation at which SIFT or ORB is not good, the reliable collation can be performed.

<Modification 3>

Three or more cameras may be connected with the image processing device. In this case, two or more cameras may be connected with one arithmetic operation unit (that is, arithmetic operation resources), or a larger number of arithmetic operation units may be provided according to the number of cameras. In a case where two or more cameras are connected with one arithmetic operation unit, the detection of an object, the estimation of a distance, the selection of a feature point, and the like may be performed with respect to each imaged image that is imaged by each camera. For example, the object detection units or the like may be prepared as many as the cameras connected with the arithmetic operation unit in number, or one object detection unit may detect an object from imaged images of all cameras connected with the arithmetic operation unit. In this manner, in a case where the number of cameras is large as described above, the effect of reducing a data transmission amount by applying the present invention becomes larger (compared to a case where image data is aggregated from all cameras).

<Modification 4>

The three-dimensional bounding box may not use an expression by three-dimensional coordinates of respective vertices. For example, an expression by three-dimensional coordinates of a center position of a three-dimensional bounding box, sizes (width, depth, height) of the three-dimensional bounding box, and directions of the three-dimensional bounding box may be used.

<Modification 5>

The degree of deformation of the surface between the cameras may not be the matrix norm of the projective transformation matrix described above. For example, the least square sum of the coordinates of each vertex of the surface in one camera and the coordinates of each vertex of the corresponding surface in the other camera may be calculated, and the value may be used as the degree of deformation of the surface between the cameras.

<Modification 6>

When the degree of deformation of the surface between the cameras is calculated by the projective transformation matrix, only a part of the projective transformation matrix may be used instead of the entire projective transformation matrix. For example, since SIFT is resistant to a change in scale (enlargement/shrinkage), no problem arises in describing the degree of deformation even if the enlargement/shrinkage components included in the projective transformation matrix are ignored. Accordingly, the matrix norm may be calculated after the enlargement/shrinkage components are removed from the projective transformation matrix.

<Modification 7>

In a case where information relating to the attribute (type) of the object is available as in the third embodiment, such information may be used in a more sophisticated manner. For example, in a case where the detected object is a pedestrian, the posture of the pedestrian can be estimated by estimating information on a skeleton of a person or the like. In this case, instead of simply dividing the two-dimensional bounding box at a fixed ratio, it is possible to more precisely specify a region that exhibits a small change with time depending on the estimated posture.

Although the embodiments of the present invention have been described heretofore, the above embodiments merely describe some application examples of the present invention, and the technical scope of the present invention is not intended to be limited to the specific configuration of the above embodiments.

Reference Signs List

10, 110, 210 image processing device
20, 120, 220 arithmetic operation device
21, 121 first arithmetic operation unit (calculation resource)
22, 122, 222 second arithmetic operation unit (calculation resource)
23, 123 third arithmetic operation unit (calculation resource)
21a, 22a, 121a, 122a object detection unit
121b, 122b distance estimation unit
21c, 22c, 121c, 122c feature selection unit
23a, 123a feature collation unit
23b distance calculation unit
30 first camera (camera)
40 second camera (camera)

## Claims

1. An image processing device comprising an arithmetic operation device, wherein
the arithmetic operation device is configured

to detect an object for each of a plurality of images imaged by a plurality of cameras,
to estimate a distance to the object for each of the plurality of images,
to determine a feature point that can be acquired in any of the plurality of images among feature points of the object using the estimated distance to the object for each of the plurality of images and camera parameters of the plurality of cameras,
to obtain a feature amount around the determined feature point for each of the plurality of images,
to collate feature amounts of the plurality of images with each other, and
to measure the distance to the object based on a result of collating the feature amounts.

2. The image processing device according to claim 1,
wherein

the arithmetic operation device is configured to obtain a three-dimensional bounding box that surrounds an object for each of a plurality of images,
the arithmetic operation device is configured to determine a target surface that can be imaged by the plurality of cameras among a plurality of surfaces that constitute the bounding box, and
the arithmetic operation device is configured to obtain feature amounts around the feature points included in the target surface.

3. The image processing device according to claim 1,
wherein
the arithmetic operation device is configured

to obtain a three-dimensional bounding box that surrounds the object for each of a plurality of images,
to estimate a projective transformation between images imaged by the plurality of cameras for a plurality of surfaces that constitute the bounding box,
to determine a target surface from which the feature point is acquired based on the estimated degree of deformation in the projective transformation of the plurality of surfaces, and
to obtain the feature amount around the feature point included in the target surface.

4. The image processing device according to claim 1, wherein the arithmetic operation device is configured to determine a position of the object where the feature point is acquired based on the detection result of the object and object shape information where a type of the object is associated with a degree of change with time in a shape of the object.

5. The image processing device according to claim 1,
wherein

the arithmetic operation device includes:

a first calculation resource to which a part of the plurality of cameras is connected; and
a second calculation resource to which another part of the plurality of cameras different from the part of the plurality of cameras is connected,

each of the first calculation resource and the second calculation resource is configured

to detect the object,
to estimate a distance to the object,
to determine the feature point, and
to obtain a feature amount around the determined feature point.

[FIG. 1]

[FIG. 2]

EP 4 644 832 A1

[FIG. 3]

16

[FIG. 4]

EP 4 644 832 A1

[FIG. 5]

(a)                    (b)

[FIG. 6]

[FIG. 7]

[FIG. 8]

```
                    ┌─────────────┐
                    │    START    │
                    └─────────────┘
                           │
                           ▼
              ┌──────────────────────────┐  S100
              │      PICK UP IMAGE       │
              └──────────────────────────┘
                           │
                           ▼
              ┌──────────────────────────┐  S110
              │      DETECT OBJECT       │
              └──────────────────────────┘
                           │
                           ▼
              ┌──────────────────────────┐  S120
              │  SPECIFY VISIBLE SURFACES │
              │     OF BOTH CAMERAS      │
              └──────────────────────────┘
                           │
                           ▼
              ┌──────────────────────────┐  S130
              │   CUT OUT PARTIAL IMAGE  │
              └──────────────────────────┘
                           │
                           ▼
              ┌──────────────────────────┐  S140
              │    SEARCH FEATURE POINT  │
              └──────────────────────────┘
                           │
                           ▼
              ┌──────────────────────────┐  S150
              │  ACQUIRE FEATURE QUANTITY │
              └──────────────────────────┘
                           │
                           ▼
              ┌──────────────────────────┐  S160
              │         COLLATE          │
              └──────────────────────────┘
                           │
                           ▼
              ┌──────────────────────────┐  S170
              │    CALCULATE DISTANCE    │
              └──────────────────────────┘
                           │
                           ▼
                    ┌─────────────┐
                    │     END     │
                    └─────────────┘
```

[FIG. 9]

```
                    ┌─────────────┐
                    │    START    │
                    └──────┬──────┘
                           │
                           ▼
              ┌───────────────────────────┐      S100
              │      PICK UP IMAGE        │
              └─────────────┬─────────────┘
                            │
                            ▼
              ┌───────────────────────────┐      S110
              │      DETECT OBJECT        │
              └─────────────┬─────────────┘
                            │
                            ▼
              ┌───────────────────────────┐      S120
              │  SPECIFY VISIBLE SURFACES │
              │      OF BOTH CAMERAS      │
              └─────────────┬─────────────┘
                            │
                            ▼
              ┌───────────────────────────┐      S200
              │   ESTIMATE PROJECTIVE     │
              │    TRANSFORMATION OF      │
              │ RESPECTIVE VISIBLE SURFACES│
              └─────────────┬─────────────┘
                            │
                            ▼
              ┌───────────────────────────┐      S210
              │   CUT OUT PARTIAL IMAGE   │
              └─────────────┬─────────────┘
                            │
                            ▼
              ┌───────────────────────────┐      S140
              │   SEARCH FEATURE POINT    │
              └─────────────┬─────────────┘
                            │
                            ▼
              ┌───────────────────────────┐      S150
              │  ACQUIRE FEATURE QUANTITY │
              └─────────────┬─────────────┘
                            │
                            ▼
              ┌───────────────────────────┐      S160
              │         COLLATE           │
              └─────────────┬─────────────┘
                            │
                            ▼
              ┌───────────────────────────┐      S170
              │    CALCULATE DISTANCE     │
              └─────────────┬─────────────┘
                            │
                            ▼
                    ┌─────────────┐
                    │     END     │
                    └─────────────┘
```

[FIG. 10]

[FIG. 11]

[FIG. 12]

```
                    ┌─────────────┐
                    │    START    │
                    └──────┬──────┘
                           │
                           ▼
              ┌────────────────────────┐   S100
              │     PICK UP IMAGE      │
              └───────────┬────────────┘
                          │
                          ▼
              ┌────────────────────────┐   S220
              │     DETECT OBJECT      │
              └───────────┬────────────┘
                          │
                          ▼
              ┌────────────────────────┐   S230
              │    ESTIMATE DISTANCE   │
              └───────────┬────────────┘
                          │
                          ▼
              ┌────────────────────────┐   S240
              │ SPECIFY VISIBLE SURFACES│
              │    OF BOTH CAMERAS     │
              └───────────┬────────────┘
                          │
                          ▼
              ┌────────────────────────┐   S250
              │  CUT OUT PARTIAL IMAGE │
              └───────────┬────────────┘
                          │
                          ▼
              ┌────────────────────────┐   S140
              │  SEARCH FEATURE POINT  │
              └───────────┬────────────┘
                          │
                          ▼
              ┌────────────────────────┐   S150
              │ ACQUIRE FEATURE QUANTITY│
              └───────────┬────────────┘
                          │
                          ▼
              ┌────────────────────────┐   S260
              │        COLLATE         │
              └───────────┬────────────┘
                          │
                          ▼
              ┌────────────────────────┐   S170
              │   CALCULATE DISTANCE   │
              └───────────┬────────────┘
                          │
                          ▼
                    ┌─────────────┐
                    │     END     │
                    └─────────────┘
```

[FIG. 13]

## INTERNATIONAL SEARCH REPORT

| International application No. |
|---|
| **PCT/JP2023/038642** |

**A. CLASSIFICATION OF SUBJECT MATTER**

*G01C 3/06*(2006.01)i; *G08G 1/16*(2006.01)i; *G06T 7/593*(2017.01)i
FI:   G06T7/593; G08G1/16 C; G01C3/06 110V

According to International Patent Classification (IPC) or to both national classification and IPC

**B. FIELDS SEARCHED**

Minimum documentation searched (classification system followed by classification symbols)

G01C3/06; G08G1/16; G06T7/593

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2007-263657 A (DENSO IT LABORATORY INC.) 11 October 2007 (2007-10-11) paragraphs [0014]-[0036], fig. 1-8 | 1-5 |
| A | JP 2022-173069 A (CANON KABUSHIKI KAISHA) 17 November 2022 (2022-11-17) paragraphs [0019]-[0066], fig. 1-10 | 1-5 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **28 December 2023** | **16 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/038642**

| Patent document cited in search report | | | Publication date (day/month/year) | Patent family member(s) | Publication date (day/month/year) |
|---|---|---|---|---|---|
| JP | 2007-263657 | A | 11 October 2007 | (Family: none) | |
| JP | 2022-173069 | A | 17 November 2022 | US 2022/0358667 A1 paragraphs [0051]-[0105], fig. 1-10<br>GB 2608496 A<br>DE 102022111119 A1<br>CN 115314697 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018194891 A